# EUROPÄISCHE PATENTANMELDUNG

(11) **EP 4 679 593 A1**
(43) Veröffentlichungstag der Anmeldung: **14.01.2026**
(21) Anmeldenummer: 24187312.4
(22) Anmeldetag: 09.07.2024
(51) Int. Cl.: H01M 50/213, H01M 50/247, H01M 50/293

(54) **AKKUPACK FÜR EINE ELEKTRISCHE HANDWERKZEUGMASCHINE**

(71) Anmelder: Hilti Aktiengesellschaft, 9494 Schaan (LI)
(72) Erfinder: Seltmann, Daniel, 86842 Türkheim (DE); Hartmann, Markus, 87665 Mauerstetten (DE); Harbaum, Julian, 82380 Peißenberg (DE)
(74) Vertreter: Hilti Aktiengesellschaft Corporate Intellectual Property

(57) **Zusammenfassung**

Akkupack für eine elektrische Handwerkzeugmaschine, wobei das Akkupack einen Akkuzellenträger mit einer ersten Zylinderkammer und einer dazu benachbarten zweiten Zylinderkammer aufweist, wobei in jeder der Zylinderkammern eine zylindrische Akkuzelle in axialer Richtung eingeschobenen werden kann, wobei eine innere Mantelfläche der ersten Zylinderkammer und eine innere Mantelfläche der zweiten Zylinderkammer eine gemeinsame Kammeröffnung aufweisen, die durch Materialverzicht im Akkuzellenträger realisiert ist, und wobei das Akkupack ein Füllstück aufweist, das zumindest abschnittweise in der gemeinsamen Kammeröffnung angeordnet ist, wobei das Füllstück als Dämpfungsfüllstück bereitgestellt ist, das weicher und/oder elastischer ist als der Akkuzellenträger.

## Beschreibung

Die vorliegende Erfindung betrifft einen Akkupack für eine elektrische Handwerkzeugmaschine. Das Akkupack weist einen Akkuzellenträger mit einer ersten Zylinderkammer und einer dazu benachbarten zweiten Zylinderkammer auf, wobei in jeder der Zylinderkammern eine zylindrische Akkuzelle in axialer Richtung eingeschobenen werden kann. Eine innere Mantelfläche der ersten Zylinderkammer und eine innere Mantelfläche der zweiten Zylinderkammer weisen eine gemeinsame Kammeröffnung auf, die durch Materialverzicht im Akkuzellenträger realisiert ist. Das Akkupack weist weiter ein Füllstück auf, dass zumindest abschnittweise in der gemeinsamen Kammeröffnung angeordnet ist.

Solche Akkupacks sind grundsätzlich aus dem Stand der Technik bekannt, beispielsweise aus der US 2014/0272517 A1, die ein Akkupack mit einem mehrwandigen Gehäuse offenbart.

Es ist Aufgabe der vorliegenden Erfindung ein Akkupack bereitzustellen, das eingeschobenen zylindrischen Akkuzellen Sicherheit bietet und dabei kostengünstig herstellbar ist.

Bezüglich des Akkupacks wird die Aufgabe dadurch gelöst, dass das Füllstück als Dämpfungsfüllstück bereitgestellt ist, das weicher und/oder elastischer ist als der Akkuzellenträger. Die Erfindung schließt die Erkenntnis ein, dass im Falle eines Sturzes eines Akkupacks - allein oder an einer Handwerkzeugmaschine befindlich - herkömmliche Akkuzellenträger die Aufprallenergie auf die Akkuzellen übertragen. Hierdurch kann es zu Schäden an den Akkuzellen kommen. Besonders bei Akkuzellenträgern, die sogenannte Doppelkavitäten für zwei dicht benachbarte Akkuzellen beherbergen, kann ein Sturz dazu führen, dass die beiden benachbarten Akkuzellen aneinanderschlagen und sich dadurch gegenseitig beschädigen.

Durch das erfindungsgemäß bereitgestellte Dämpfungsfüllstück, das vorzugswese zwischen zwei horizontal benachbarte Zellen in den Zellhalter positioniert ist, wird dieser Nachteil vermieden. Vorteilhafterweise kann das Dämpfungsfüllstück Toleranzen zwischen zwei benachbarten Akkuzellen ausgleichen. Es hat sich als vorteilhaft herausgestellt, wenn die gemeinsame Kammeröffnung vollständig durch das Dämpfungsfüllstück verschlossen ist. Alternativ kann die gemeinsame Kammeröffnung lediglich teilweise, insbesondere höchstens zu einem Drittel durch das Dämpfungsfüllstück verschlossen sein.

Das Dämpfungsfüllstück weist vorzugsweise ein Elastizitätsmodul von kleiner als 2000 MPa auf, bevorzugt kleiner als 1500 MPa, weiter bevorzugt kleiner als 1000 MPa oder 500 MPa. Die Messung eines Elastizitätsmoduls kann in Anlehnung an EN ISO 527-1 (europäische Norm für Kunststoffe zur Bestimmung der Zugeigenschaften) ermittelt werden. Es hat sich ebenfalls als vorteilhaft herausgestellt, wenn das Dämpfungsfüllstück eine Härte kleiner 80 Shore A, bevorzugt kleiner 70 Shore A oder 60 Shore A aufweist. Die Shore-Härte wird gemäß DIN ISO 7619-1 bestimmt. Es hat sich als vorteilhaft herausgestellt, wenn das Dämpfungsfüllstück aus einem Elastomer, insbesondere einem thermoplastischen Elastomer besteht.

In einer besonders bevorzugten Ausgestaltung weist das Dämpfungsfüllstück zwei konkave Oberflächen auf. Es hat sich als vorteilhaft herausgestellt, wenn das Dämpfungsfüllstück zwei gegenüberliegende und von den konkaven Oberflächen verschiedene Einkerbungen aufweist. In einer besonders bevorzugten Ausgestaltung ist eine durch die konkaven Oberflächen in axialer Richtung aufgespannte Projektionsfläche wenigstens dreimal, vorzugsweise viermal mal so groß wie eine durch die gegenüberliegenden Einkerbungen in axialer Richtung aufgespannte Projektionsfläche. In einer weiteren besonders bevorzugten Ausgestaltung ist eine durch die konkaven Oberflächen in axialer Richtung aufgespannte Projektionsfläche höchstens sechsmal, vorzugsweise höchstens fünfmal so groß wie eine durch die gegenüberliegenden Einkerbungen in axialer Richtung aufgespannte Projektionsfläche. Die Projektionsflächen der konkaven Oberflächen und die Projektionsflächen der Einkerbungen werden jeweils summarisch betrachtet. Es hat sich als vorteilhaft herausgestellt, wenn eine Bogenlänge einer jeweiligen konkaven Oberfläche wenigstens ein Drittel eines inneren Gesamtumfangs einer jeweiligen Zylinderkammer ausmacht.

Der Akkuzellenträger kann eine dritte Zylinderkammer und eine dazu benachbarte vierte Zylinderkammer aufweisen, wobei eine innere Mantelfläche der dritten Zylinderkammer und eine innere Mantelfläche der vierten Zylinderkammer ebenfalls eine gemeinsame Kammeröffnung aufweisen, die durch Materialverzicht im Akkuzellenträger realisiert ist. Es hat sich als vorteilhaft herausgestellt, wenn alle vier Zylinderkammern eine gemeinsame Zentralöffnung aufweisen, wobei das Dämpfungsfüllstück die gemeinsame Zentralöffnung vollständig verschließt.

In einer besonders bevorzugten Ausgestaltung weist das Dämpfungsfüllstück eine in axialer Richtung abragende Nase auf, die mit einer korrespondierenden im Zellträger ausgebildeten Nut in Eingriff ist. Die Nase kann als Einführhilfe dienen und eine Gasdichtigkeit zwischen den Zylinderkammern verbessern. Es hat sich als vorteilhaft herausgestellt, wenn das Dämpfungsfüllstück einen kreuzförmigen oder x-förmigen Querschnitt aufweist.

In einer besonders bevorzugten Ausgestaltung besteht der Akkuzellenträger aus Kunststoff. Es hat sich als vorteilhaft herausgestellt, wenn sich die gemeinsame Kammeröffnung in axialer Richtung über die gesamte Länge der inneren Mantelflächen erstreckt. In einer weiteren bevorzugten Ausgestaltung ist in jeder Zylinderkammer genau eine zylindrische Akkuzelle aufgenommen, wobei das Dämpfungsfüllelement vorzugsweise auf jede der mit ihr in unmittelbaren Kontakt stehenden zylindrischen Akkuzellen eine Druckspannung ausübt. Eine jede der zylindrischen Akkuzellen kann jeweils unmittelbar von der inneren Mantelfläche der Zylinderkammer umgeben sein.

Weitere Vorteile ergeben sich aus der folgenden Figurenbeschreibung. In den Figuren sind besonders bevorzugte Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel eines Akkupacks.
- Fig. 2: das Dämpfungsfüllstück des Akkupacks der Fig. 1;
- Fig. 3: ein Ausschnitt des Akkupacks der Fig. 1 mit Akkuzellen;
- Fig. 4: das Dämpfungsfüllstück der Fig. 2 in perspektivischer Darstellung;
- Fig. 5: ein Querschnitt des Akkupacks der Fig. 1;
- Fig. 6: ein Akkuzellenträger eines gemäß eines zweiten Ausführungsbeispiels; und
- Fig. 7: eine Draufsicht auf den Akkuzellenträger der Fig. 6.

### Ausführungsbeispiel:

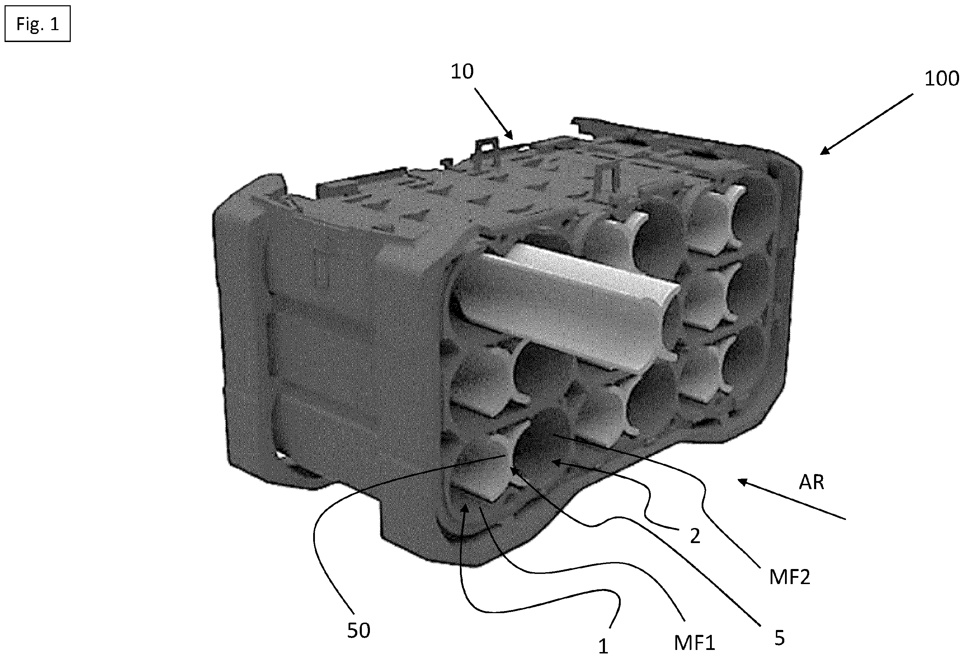

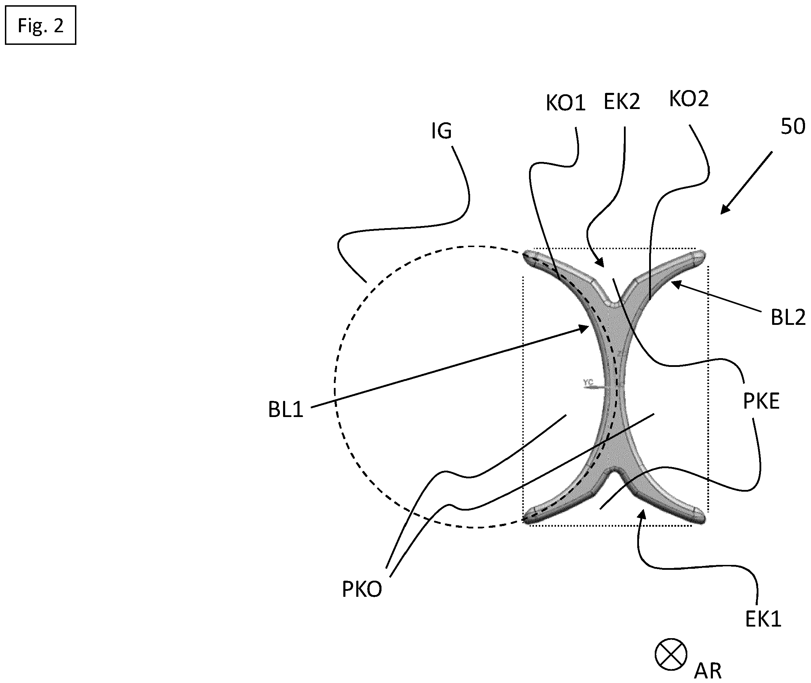

Ein besonders bevorzugtes Ausführungsbeispiel eines Akkupacks 100 ist in Fig. 1 dargestellt. Es ist vorgesehen für eine hier nicht dargestellte elektrische Handwerkzeugmaschine. Das Akkupack 100 weist einen Akkuzellenträger 10 auf, der vollständig aus einem schlagzähen Kunststoff besteht. Der Akkuzellenträger 10 ausgestattet mit einer ersten Zylinderkammer 1 und einer dazu benachbarten zweiten Zylinderkammer 2. In Fig. 1 sind die erste Zylinderkammer 1 und die zweite Zylinderkammer 2 horizontal benachbart. In jeder der Zylinderkammern 1, 2 kann eine zylindrische Akkuzelle 20 (vgl. Fig. 2) in axialer Richtung AR eingeschobenen werden.

Eine innere Mantelfläche MF1 der ersten Zylinderkammer 1 und eine innere Mantelfläche MF2 der zweiten Zylinderkammer 2 weisen eine gemeinsame Kammeröffnung 5 auf, die durch Materialverzicht im Akkuzellenträger 10 realisiert ist. Somit können die Zylinderkammern 1, 2 als sogenannte Doppelkavität bezeichnet werden.

Erfindungsgemäß weist das Akkupack 100 ein Dämpfungsfüllstück 50 auf, das in der gemeinsamen Kammeröffnung 5 angeordnet ist, wobei das Dämpfungsfüllstück 50 weicher und elastischer ist als der Akkuzellenträger 10. Im gezeigten Ausführungsbeispiel ist besteht das Dämpfungsfüllstück 50 beispielhaft aus einem Elastomer mit einem Elastizitätsmodul kleiner 500 MPa und einer Härte kleiner 60 Shore A. Der Akkuzellenträger 10 besteht beispielhaft aus einem schlagzähen Polystyrol mit einem Elastizitätsmodul größer als 1500 MPa und einer Härte größer 80 Shore A.

Fig. 2 zeigt das Dämpfungsfüllstück 50 des Akkupacks 100 der Fig. 1. Im Folgenden werden beispielhaft vorteilhafte geometrische Eigenschaften des Dämpfungsfüllstücks 50 beschrieben. Das Dämpfungsfüllstück 50 weist zwei konkave Oberflächen KO1, KO2 auf, die einander gegenüberliegen. Somit kann das Dämpfungsfüllstück 50 als "bikonkav" bezeichnet werden. Weiterhin weist das Dämpfungsfüllstück 50 zwei gegenüberliegende und von den konkaven Oberflächen KO1, KO2 verschiedene Einkerbungen EK1, EK2 auf. Eine durch die konkaven Oberflächen KO1, KO2 in axialer Richtung AR aufgespannte Projektionsfläche PKO ist beispielhaft wenigstens viermal so groß und höchstens fünfmal so groß, wie eine durch die gegenüberliegenden Einkerbungen EK1, EK2 in axialer Richtung AR aufgespannte Projektionsfläche PEK. Die Projektionsflächen sind in Fig. 2 durch gepunktete Linien dargestellt.

Wie der Fig. 2 weiter entnommen werden kann, macht eine Bogenlänge BL1, BL2 einer jeweiligen konkaven Oberfläche KO1, KO2 wenigstens ein Drittel eines inneren Gesamtumfangs IG einer jeweiligen Zylinderkammer 1, 2 aus. Mit anderen Worten: Betrachtet man den inneren Gesamtumfang IG als den Umfang eines 360 Grad Vollkreis, so entsprächen die Bogenlänge BL1, BL2 eine Kreissegment größer 120 Grad.

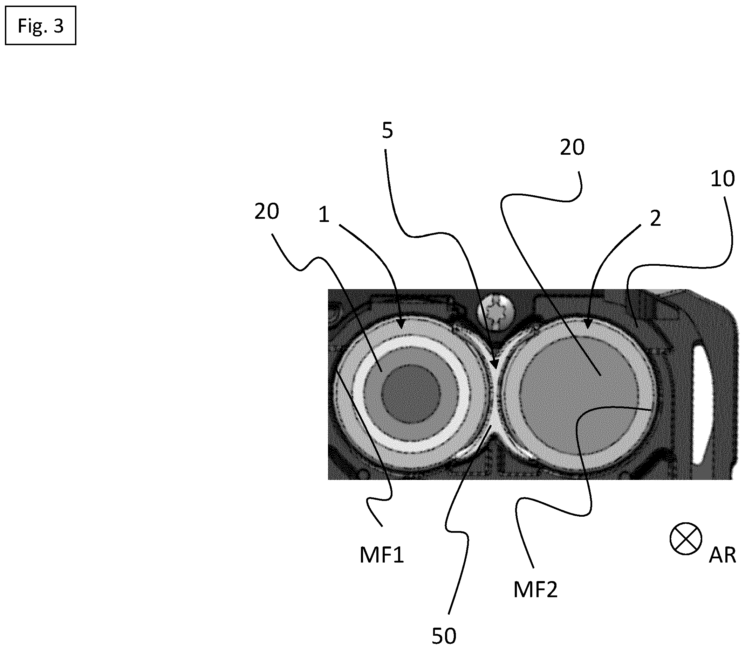

Fig. 3 zeigt einen Ausschnitt des Akkupacks der Fig. 1 mit Akkuzellen 20. In jeder Zylinderkammer 1, 2 ist genau eine zylindrische Akkuzelle 20 aufgenommen, wobei jeweils genau eine zylindrische Akkuzelle 20 in axialer Richtung AR antiparallel eingeschoben wurde. Das elastische Dämpfungsfüllstück 50 übt auf jede der mit ihr in unmittelbaren Kontakt stehenden zylindrischen Akkuzellen 20 eine Druckspannung aus. Die zylindrischen Akkuzellen 20 sind beispielhaft vom Typ 21700. Wie der Fig. 3 entnommen werden kann, ist eine jede der zylindrischen Akkuzellen 20 jeweils unmittelbar von der inneren Mantelfläche MF1, MF2 der Zylinderkammer 1, 2 umgeben. Die gemeinsame Kammeröffnung 5 ist vollständig durch das Dämpfungsfüllstück 50 verschlossen.

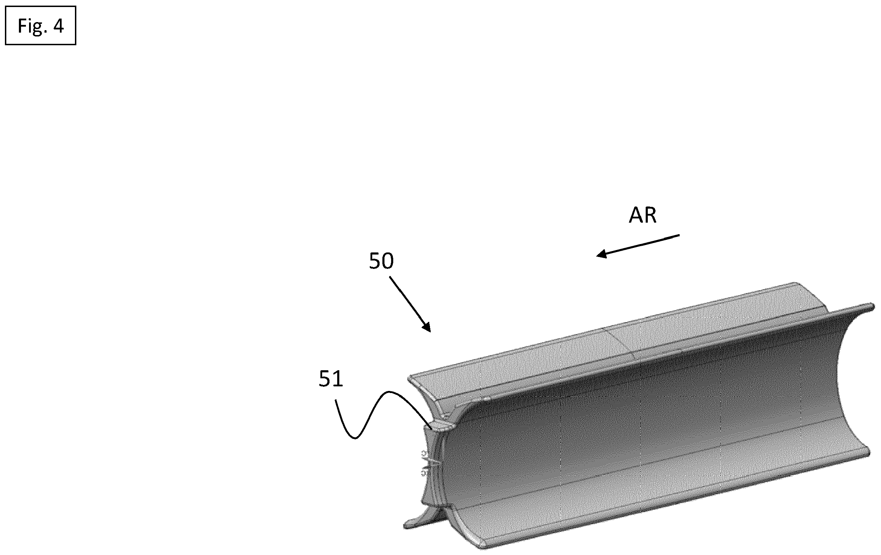

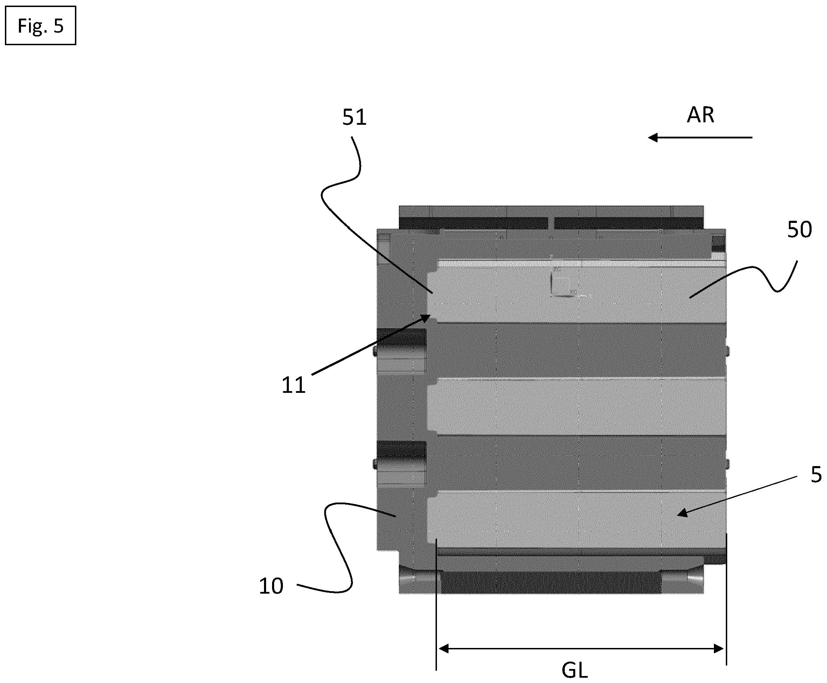

Fig. 4 zeigt das Dämpfungsfüllstück der Fig. 2 in perspektivischer Darstellung. Das Dämpfungsfüllstück 50 weist eine in axialer Richtung AR abragende Nase 51 auf, die mit einer korrespondierenden im Zellträger 10 ausgebildeten Nut 11 (vgl. Fig. 5) in Eingriff ist.

Ein Querschnitt des Akkupacks der Fig. 1 ist in Fig. 5 dargestellt. Gut zu erkennen ist, dass das Dämpfungsfüllstück 50 eine in axialer Richtung AR abragende Nase 51 aufweist, die mit einer korrespondierenden im Zellträger 10 ausgebildeten Nut 11 in Eingriff ist. Die gemeinsame Kammeröffnung 5 erstreckt sich in axialer Richtung AR über die gesamte Länge GL der inneren Mantelflächen MF1, MF2. Durch die gezeigte Ausgestaltung des Dämpfungsfüllstücks 50 wird eine Kontaktfläche zwischen Dämpfungsfüllstücks 50 und Zellträger 10 vergrößert, was die Stoßabsorption verbessert. In Synergie dazu wird durch die im Zellträger 10 ausgebildeten Nut 11 die Gasmigration von aus den Akkuzellen austretender Gase verringert, wenn die Nase 51 mit der Nut 11 in Eingriff steht.

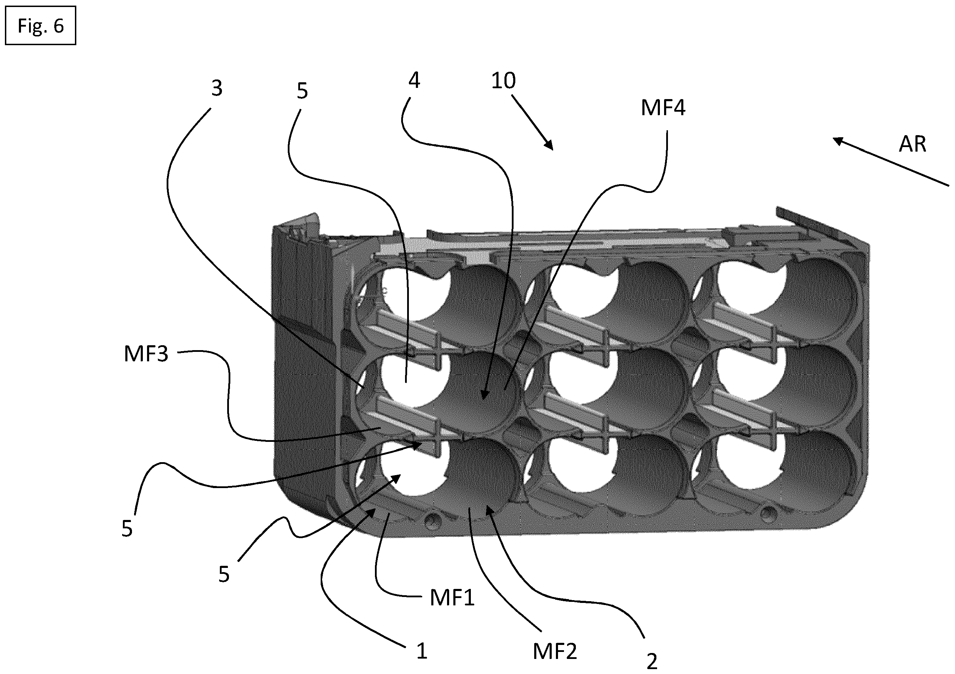

Fig. 6 zeigt einen Akkuzellenträger 10 gemäß eines zweiten bevorzugten Ausführungsbeispiels. Der Akkuzellenträger 10 ausgestattet mit einer ersten Zylinderkammer 1 und einer dazu benachbarten zweiten Zylinderkammer 2. In Fig. 6 sind die erste Zylinderkammer 1 und die zweite Zylinderkammer 2 horizontal benachbart. In jeder der Zylinderkammern 1, 2 kann eine zylindrische Akkuzelle in axialer Richtung AR eingeschobenen werden. Eine innere Mantelfläche MF1 der ersten Zylinderkammer 1 und eine innere Mantelfläche MF2 der zweiten Zylinderkammer 2 weisen eine gemeinsame Kammeröffnung 5 auf, die durch Materialverzicht im Akkuzellenträger 10 realisiert ist. Somit können die Zylinderkammern 1, 2 als sogenannte Doppelkavität bezeichnet werden.

Der Akkuzellenträger 10 weist darüber hinaus eine dritte Zylinderkammer 3 und eine dazu benachbarte vierte Zylinderkammer 4 auf, wobei eine innere Mantelfläche MF3 der dritten Zylinderkammer 3 und eine innere Mantelfläche MF4 der vierten Zylinderkammer 4 ebenfalls eine gemeinsame Kammeröffnung 5 aufweisen, die durch Materialverzicht im Akkuzellenträger 10 realisiert ist. Somit können die Zylinderkammern 3, 4 als sogenannte Doppelkavität bezeichnet werden. Alle vier Zylinderkammern 1, 2, 3, 4 weisen in ihrem gemeinsamen Zentrum eine gemeinsame Zentralöffnung 7 auf. Wie der Fig. 6 weiter entnommen werden kann, verschließt das Dämpfungsfüllstück 50 die gemeinsame Zentralöffnung 7 in horizontaler Richtung vollständig. In vertikaler Richtung verschließt das Dämpfungsfüllstück 50 die gemeinsame Kammeröffnung 5 jeweils zumindest abschnittweise. Das Dämpfungsfüllstück 50 weist einen kreuzförmigen Querschnitt auf.

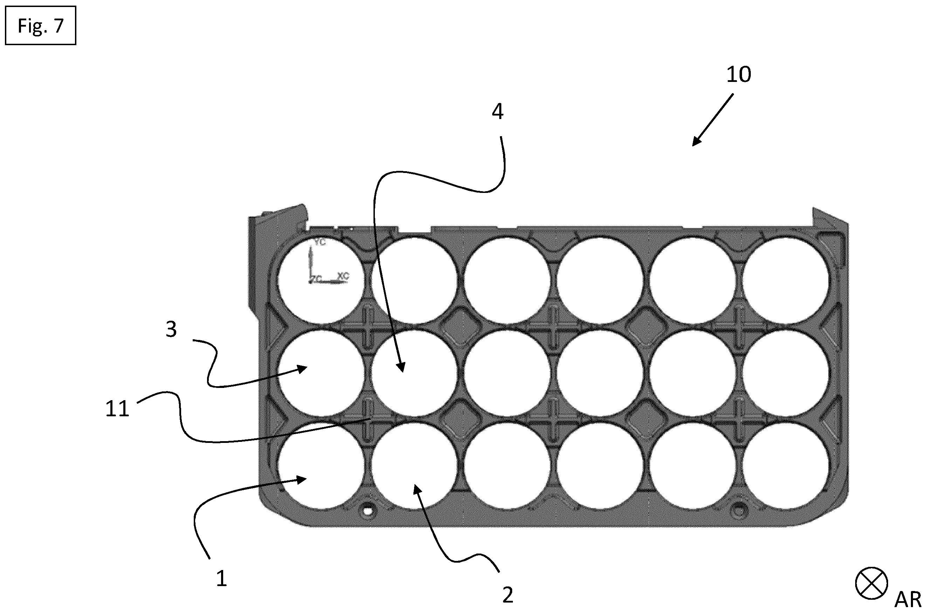

Fig. 7 zeigt eine Draufsicht auf den Akkuzellenträger 10 der Fig. 6. Gut zu erkennen ist die im Zellträger 10 ausgebildete kreuzförmige Nut 11, die mit dem kreuzförmigen Querschnitt des in Fig. 6 gezeigten Dämpfungsfüllstück 50 korrespondiert. Somit ist eine in axialer Richtung abragende Nase des Dämpfungsfüllstücks 50 querschnittsgleich mit dem Dämpfungsfüllstück 50. Mit anderen Worten wird beim Ausführungsbeispiel der Fig. 6 derjenige Anteil des Dämpfungsfüllstücks 50 als "abragende Nase" bezeichnet, der mit der in Fig. 7 gezeigten kreuzförmige Nut 11 in Eingriff steht.

Der kreuzförmige Querschnitt des Dämpfungsfüllstücks 50 dient zum einen der Positionierung des Dämpfungsfüllstück 50 im Zellträger 10. Gleichzeigt bildet der Formschluss von kreuzförmigen Querschnitt und kreuzförmiger Nut eine Art Gaslabyrinth, das Gasmigration von aus den Akkuzellen austretender heißer Gase zwischen den beiden Doppellochkavitäten verhindert, zumindest aber reduziert.

### Bezugszeichenliste

- 1: erste Zylinderkammer
- 2: zweite Zylinderkammer
- 3: dritte Zylinderkammer
- 4: vierte Zylinderkammer
- 5: gemeinsame Kammeröffnung
- 7: gemeinsame Zentralöffnung
- 10: Akkuzellenträger
- 11: Nut
- 20: zylindrische Akkuzelle
- 50: Dämpfungsfüllstück
- 51: Nase des Dämpfungsfüllstücks
- 100: Akkupack

- AR: axiale Richtung
- BL1: Bogenlänge der konkaven Oberfläche
- BL2: Bogenlänge der konkaven Oberfläche
- EK1: Einkerbung des Dämpfungsfüllstücks
- EK1: Einkerbung des Dämpfungsfüllstücks
- GL: Gesamtlänge
- IG: innerer Gesamtumfang einer jeweiligen Zylinderkammer
- KO1: konvexe Oberfläche der Dämpfungsfüllstücks
- KO2: konvexe Oberfläche der Dämpfungsfüllstücks
- MF1: innere Mantelfläche der ersten Zylinderkammer
- MF2: innere Mantelfläche der zweiten Zylinderkammer
- MF3: innere Mantelfläche der dritten Zylinderkammer
- MF4: innere Mantelfläche der vierten Zylinderkammer
- PKO: Projektionsfläche der konkaven Oberflächen
- PEK: Projektionsfläche der Einkerbungen

## Patentansprüche

1. Akkupack (100) für eine elektrische Handwerkzeugmaschine, wobei das Akkupack (100) einen Akkuzellenträger (10) mit einer ersten Zylinderkammer (1) und einer dazu benachbarten zweiten Zylinderkammer (2) aufweist, wobei in jeder der Zylinderkammern (1, 2) eine zylindrische Akkuzelle (20) in axialer Richtung (AR) eingeschobenen werden kann, wobei eine innere Mantelfläche (MF1) der ersten Zylinderkammer (1) und eine innere Mantelfläche (MF2) der zweiten Zylinderkammer (2) eine gemeinsame Kammeröffnung (5) aufweisen, die durch Materialverzicht im Akkuzellenträger (10) realisiert ist, und wobei das Akkupack (100) ein Füllstück aufweist, das zumindest abschnittweise in der gemeinsamen Kammeröffnung (5) angeordnet ist,
**dadurch gekennzeichnet, dass** das Füllstück als Dämpfungsfüllstück (50) bereitgestellt ist, das weicher und/oder elastischer ist als der Akkuzellenträger (10).

2. Akkupack (100) nach Anspruch 1,
**dadurch gekennzeichnet, dass** das Dämpfungsfüllstück (50) ein Elastizitätsmodul von kleiner als 2000 MPa aufweist.

3. Akkupack (100) nach Anspruch 1 oder 2,
**dadurch gekennzeichnet, dass** das Dämpfungsfüllstück (50) eine Shore-Härte kleiner 80 Shore A aufweist.

4. Akkupack (100) nach einem der vorangehenden Ansprüche,
**dadurch gekennzeichnet, dass** das Dämpfungsfüllstück (50) zwei konkave Oberflächen (KO1, KO2) aufweist.

5. Akkupack (100) nach Anspruch 4,
**dadurch gekennzeichnet, dass** das Dämpfungsfüllstück (50) zwei gegenüberliegende und von den konkaven Oberflächen (KO1, KO2) verschiedene Einkerbungen (EK1, EK2) aufweist.

6. Akkupack (100) nach Anspruch 5,
**dadurch gekennzeichnet, dass** eine durch die konkaven Oberflächen (KO1, KO2) in axialer Richtung (AR) aufgespannte Projektionsfläche (PKO) wenigstens dreimal so groß und/oder höchstens sechsmal so groß ist wie eine durch die gegenüberliegenden Einkerbungen (EK1, EK2) in axialer Richtung (AR) aufgespannte Projektionsfläche (PEK).

7. Akkupack (100) nach einem der Ansprüche 4 bis 6,
**dadurch gekennzeichnet, dass** eine Bogenlänge (BL1, BL2) einer jeweiligen konkaven Oberfläche (KO1, KO2) wenigstens ein Drittel eines inneren Gesamtumfangs (IG) einer jeweiligen Zylinderkammer (1, 2) ausmacht.

8. Akkupack (100) nach einem der vorangehenden Ansprüche,
**dadurch gekennzeichnet, dass** der Akkuzellenträger (10) eine dritte Zylinderkammer (3) und eine dazu benachbarte vierte Zylinderkammer (4) aufweist, wobei eine innere Mantelfläche (MF3) der dritten Zylinderkammer (3) und eine innere Mantelfläche (MF4) der vierten Zylinderkammer (4) ebenfalls eine gemeinsame Kammeröffnung (5) aufweisen, die durch Materialverzicht im Akkuzellenträger (10) realisiert ist, und wobei alle vier Zylinderkammern (1, 2, 3, 4) eine gemeinsame Zentralöffnung (7) aufweisen, wobei das Dämpfungsfüllstück (50) die gemeinsame Zentralöffnung (7) vollständig verschließt.

9. Akkupack (100) nach einem der vorangehenden Ansprüche,
**dadurch gekennzeichnet, dass** das Dämpfungsfüllstück (50) eine in axialer Richtung (AR) abragende Nase (51) aufweist, die mit einer korrespondierenden im Zellträger (10) ausgebildeten Nut (11) in Eingriff ist.

10. Akkupack (100) nach einem der vorangehenden Ansprüche,
**dadurch gekennzeichnet, dass** das Dämpfungsfüllstück (50) einen kreuzförmigen oder x-förmigen Querschnitt aufweist.

11. Akkupack (100) nach einem der vorangehenden Ansprüche,
**dadurch gekennzeichnet, dass** der Akkuzellenträger (10) aus Kunststoff besteht.

12. Akkupack (100) nach einem der vorangehenden Ansprüche,
**dadurch gekennzeichnet, dass** sich die gemeinsame Kammeröffnung (5) in axialer Richtung (AR) über die gesamte Länge der inneren Mantelflächen (MF1, MF2) erstreckt.

13. Akkuzellenträger (10) nach einem der vorangehenden Ansprüche,
**dadurch gekennzeichnet, dass** in jeder Zylinderkammer (1, 2) genau eine zylindrische Akkuzelle (20) aufgenommen ist, wobei das Dämpfungsfüllstück (50) auf jede der mit ihr in unmittelbaren Kontakt stehenden zylindrischen Akkuzellen (20) eine Druckspannung ausübt.

14. Akkuzellenträger (10) nach einem der vorangehenden Ansprüche,
**dadurch gekennzeichnet, dass** eine jede der zylindrischen Akkuzellen (20) jeweils unmittelbar von der inneren Mantelfläche (MF1, MF2) der Zylinderkammer (1, 2) umgeben ist.
